(19) Europäisches Patentamt / European Patent Office / Office européen des brevets

(11) **EP 3 731 144 A1**

(12) **EUROPEAN PATENT APPLICATION**

(43) Date of publication:
**28.10.2020 Bulletin 2020/44**

(51) Int Cl.:
**G06K 9/62** *(2006.01)*

(21) Application number: **19170988.0**

(22) Date of filing: **25.04.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventor: **GOSHEN, Liran**
**5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **DEEP ADVERSARIAL ARTIFACT REMOVAL**

(57) A system (TS) for training a machine learning model for image processing. A training input image (Ia,If) is drawn from a set of training images. The system comprises at least three machine learning models (G, DI, DC) having parameters that define a configuration. One of the model is a target machine learning model (G) that transforms the training input image into an intermediate representation (RC) to then produce therefrom a training output image (Io). The three models further comprise a first auxiliary machine learning model (DI) for image discrimination and a second auxiliary machine learning model (DC) to facilitate enforcing a regularizing of the training of the target machine learning model. The first auxiliary machine learning model (DI) selectively processes the training output image or a sample image from the set of training images, to attempt classifying the respective image into one of two image classes, thereby producing a first intermediate result indicative of the image classification. The second auxiliary machine learning model (DC) selectively processes the intermediate representation or a sample representation, to attempt classifying the respective representation into one of two representation classes, thereby producing a second intermediate result indicative of the representation classification. A model parameter adjuster (PA) adjusts the configuration based on the first intermediate result and on the second intermediate result.

FIG. 2

**Description**

FIELD OF THE INVENTION

The invention relates to a system for training a machine learning model, to a system for image artifact reduction, to an imaging arrangement, to a method for training a machine learning model, to a computer program element, and to a computer readable medium.

BACKGROUND OF THE INVENTION

In medical imaging, artifacts are misrepresentations of tissue structures seen in medical images produced by modalities such as ultrasonography, X-ray computed tomography, and magnetic resonance imaging. These artifacts may be caused by a variety of phenomena such as the underlying physics of the energy-tissue interaction (e.g., ultrasound-air), data acquisition errors (such as patient motion), or a reconstruction algorithm's inability to faithfully represent the anatomy. Physicians typically learn to recognize some of these artifacts to avoid mistaking them for actual pathology. For example, although images produced by CT are generally faithful representations of the scanned volume, the technique is susceptible to a number of artifacts, such as the following: streak artifact, ring artifact, partial volume effect, noise, motion artifact, windmill artifacts, metal artifact and beam hardening.

Artifacts commonly encountered in medical imaging may obscure or simulate pathology, which may lead to wrong diagnosis. In some situations, the artifacts can seriously degrade the quality of images, sometimes to the point of making them diagnostically unusable.

In general, the presence of artifacts makes it harder to read the images and could increase the reading time and effort. Moreover, they may contribute to incidents of an oversight of findings of abnormalities. In addition, artifacts may reduce the confidence of the diagnostic report and as a result the patient may be sent to additional imaging studies. This could cause delay in patient treatment and could increase workload and medical costs.

SUMMARY OF THE INVENTION

There may therefore be a need for alternative system and method to address some of the above mentioned shortcomings.

The object of the present invention is solved by the subject matter of the independent claims where further embodiments are incorporated in the dependent claims. It should be noted that the following described aspect of the invention equally applies to the training method, to a system for image artifact reduction, to the imaging arrangement, to the computer program element and to the computer readable medium.

According to a first aspect of the invention there is provided a system for training a machine learning model for image processing, comprising:

an input interface for receiving at least one training input image drawn from a set of training images;
at least three machine learning models having parameters that define a configuration, the at least three machine learning models comprising:

a target machine learning model to transform the training input image into an intermediate representation and to produce therefrom a training output image;
a first auxiliary machine learning model for image discrimination;
a second auxiliary machine learning model to facilitate enforcing a regularizing of the training of the target machine learning model;

wherein the first auxiliary machine learning model selectively processes the training output image or a sample image from the set of training images, to attempt classifying the respective image into one of two image classes, thereby producing a first intermediate result indicative of the image classification; and
wherein the second auxiliary machine learning model selectively processes the intermediate representation (also referred to herein as a "code") or a sample representation, to attempt classifying the respective representation into one of two representation classes, thereby producing a second intermediate result indicative of the representation classification; a model parameter adjuster is configured to adjust the configuration based on the first intermediate result and on the second intermediate result.

The proposed system provides an efficient automatic removal of image artifacts, in particular for medical images. The system provides clinicians with images of a better image quality. This could contribute to the reduction of reading time, effort, repeatable imaging studies and could also reduce the chance of misdiagnosis.

Advantageously, the proposed system can be trained using only unpaired weakly annotated data. Weakly annotated data means that annotations only indicate whether an image does or does not contain an artifact. Unpaired data means that in the training set there are no corresponding image pairs of an images with artifacts and its corrected counterpart image without artifacts. The proposed method and system eliminates the need to prepare reliable paired, annotated training data. In many cases, the preparation of such paired-fully-annotated training data is infeasible, or it is at least a very challenging, tedious, time-consuming and costly task. In other words, in embodiments of the system, the set of training images comprises images merely of at least a first and second category. Specifically, in embodiments, the imagery in a first category includes at least one image artifact and wherein imagery in a second category includes no artifact or includes an artifact at a lower severity than in the imagery of the first category.

Preferably, the first and second auxiliary machine learning models are adversarially coupled to the target machine learning model. The adversarial coupling may be implemented by the model parameter adjuster. The model adjuster attempts to adjust the configuration so as to the balance adverse objectives in relation to the target model and the two auxiliary models. The adversarial setup allows training based on merely weakly annotated and unpaired data, whilst still achieving a robustly trained target model.

In embodiments, the model parameter adjuster is configured to adjust the configuration so as to improve at least one objective function. Specifically, in embodiments, there is a plurality of objective functions, each associated with a respective objective and a respective one of the three models. The objective associated with the target model is in an adverse relationship to at least one of the objectives associated with the two auxiliary models. The relationship is adverse because adjusting the configuration so as to promote the respective objectives associated with either one of the auxiliary models, is at the expense of the objective associated with the target model.

More specifically, the proposed system may be formulated in an adversarial generator-discriminator setup. In this setup, the two auxiliary models are arranged as discriminator models referred to herein as the code discriminator and the image discriminator, respectively, whilst the target model serves as the generator. The two discriminator models serve different functions. The first auxiliary machine learning model, the image discriminator, is arranged for image discrimination. It attempts to discriminate between images from the training set and the imagery generatable by the generator. The second auxiliary machine learning model, the code discriminator, facilitates enforcing a regularizing of the training of the target machine learning model. The regularization can be formulated in terms of properties of the intermediate representation. Preferably, the intermediate representation, or "code", has a low complexity. Complexity may be measured by a complexity measure. One such measure is sparsity.

Specifically, in embodiments of the proposed system, the second auxiliary model, the code discriminator, facilitates utilizing the sparsity principle, a special type of regularization. In statistics and machine learning, the sparsity principle is a powerful principle that is used to perform model selection. The sparsity principle encourages selecting a simpler model from among a large collection or possible models. In the training of the target model, the parameter adjuster tends to prefer a target model configuration that generates the intermediate representation at a sparse representation. This allows achieving robust and accurate results. Sparsity may be formulated in terms of expansion in a system of basis elements, such as known from finite or infinite vector spaces. A representation in this basis system is sparser than another if there are more basis elements with zero coefficients, or with coefficients less than a negligibility threshold.

The parameter adjuster attempts to adjust the configuration such that the probability distribution of the generator is probabilistically indistinguishable from the true distributions of the training data set and of the set of regularized representations, such as the sparse representations. In other words, once the configuration is suitably adjusted over one or more iterations and over a plurality of training input images, the discriminators can now no longer confidently classify into the respective two classes, the representation class and the image class, respectively. The respective probabilities tend to converge over the iterations and settle at around 50%.

In embodiments, the system comprises a representation sampler capable to produce one or more of the sample representations that define a first representation class of the representation classes.

In embodiments, the representation sampler is configured to produce the one or more sample representations at a pre-defined level of complexity, such as sparsity.

In embodiments, at least one of the at least three models is a neural network.

In embodiments, the training output image has the same size and/or dimensionality as the training input image, and wherein the intermediate representation has a size or dimensionality different from the training input image. If the generator is configured so that the size and/or dimensionality of the intermediate representation is larger than that of the training input image, an over-complete representation can be achieved. Combining over-complete representations with sparsity regularization as proposed herein in embodiments allows achieving even more robustness and accuracy of the trained target model. Alternatively, the target generator is configured to reduce the size and/or dimensionality of intermediate representation as compared to size/dimensionality of the training input image. For some imagery, this reduced or "compressed" representation also allows achieving good robustness and accuracy.

In embodiments, the target model includes an autoencoder network.

In another aspect there is a provided a computer implemented system for image artifact reduction, comprising:

an input interface to receive an input image;
a machine learning component including the target model previously trained by a system as per any one of the above mentioned embodiments, the machine learning component to process the input image to produce an output image with an image artifact reduced.

In another aspect there is a provided a computer-implemented method of training a machine learning model, comprising the steps of:

receiving at least one training input image drawn from a set of training images;
transforming, by a target machine learning model, the training input image into an intermediate representation and to produce therefrom a training output image (Io);
selectively processing, by a first auxiliary machine learning model, the training output image or a sample image from the set of training images, to attempt classifying the respective image into one of two image classes, thereby producing a first intermediate result indicative of the image classification;
selectively processing, by a second auxiliary machine learning model, the intermediate representation or a sample representation, to attempt classifying the respective representation into one of two representation classes, thereby producing a second intermediate result indicative of the representation classification;
adjusting a configuration based on a first intermediate result and on the second intermediate result, said configuration comprising parameters of the three machine learning models.

In embodiments, the first auxiliary machine learning model is for image discrimination whilst the second auxiliary machine learning model facilitates enforcing a regularizing (e.g., sparsity) of the training of the target machine learning model. Preferably, the first and second auxiliary machine learning model are adversarially coupled to the target machine learning model. The adverse coupling may be implemented by the parameter adjuster adjusting the configuration so as to further respective objectives in relation to the target model and the two auxiliary models, with the objectives being adverse, that is at opposition, relative to each other. The parameter adjuster attempts to adjust the configuration so as to balance the adverse objectives. The objectives may be formulated by using one or more objective functions. The objective functions may be formulated as terms in a single objective function or as a system of objective functions that are jointly optimized.

In another aspect there is a provided an imaging arrangement comprising:

a system as per any one of the above embodiments;
an imaging apparatus for supplying an input image to be processed by the system; and
a display device for displaying the processed image.

In another aspect there is a provided a computer program element, which, when being executed by at least one processing unit, is adapted to cause the processing unit to perform the method.

In another aspect there is a provided a computer readable medium having stored thereon the program element.

In general, a "machine learning component or model" is a computerized arrangement that implements a machine learning ("ML") algorithm. The algorithm is configured to perform a task. In an ML algorithm, task performance improves measurably after having provided the arrangement with training data. The performance may be measured by objective tests when feeding the training model with test data. The performance may be defined by requiring a certain error rate to be achieved for the given test data. See T. M. Mitchell, "Machine Learning", page 2, section 1.1, McGraw-Hill, 1997. The task of main interest herein is the automatic removal of image artifacts.

An encoder-decoder network, such as an "autoencoder", as envisaged herein for the generator model is a neural network (NN) architecture, in particular a convolutional neural network (CNN), where a size (measured in nodes for example) of its initial input layer equals the size of its final output layer. In at least two hidden layers, the encoder and decoder, respectively, the input image is first decreased in spatial size or dimension relative to the input, to achieve a reduced representation, and is then increased. Alternatively, the input image is first increased in spatial size or dimension, to achieve an over-complete representation, and is then decreased.

A machine learning component, in particular constructed according to the "encoding/decoding principle", may include at least two hidden layers. One layer is configured to map the initial input image down to a representation of a lower or higher dimension than the initial input image and the at least one other hidden layer is configured to remap the central representation to a second image having the same dimension as the input image. The representation may be referred to herein as the central representation because it emerges as an intermediate output between the said at least two hidden layers.

BRIEF DESCRIPTION OF THE DRAWINGS

Exemplary embodiments of the invention will now be described with reference to the following drawings, which are not to scale, wherein:

Figure 1 shows a schematic block diagram of an imaging arrangement including a training system for machine learning;
Figure 2 shows a schematic block diagram of a system for training a machine learning model;
Figure 3 shows a generative model as an embodiment of a machine learning model; and
Figure 4 shows a flow chart of a computer implemented method for training a machine learning model.

DETAILED DESCRIPTION OF EMBODIMENTS

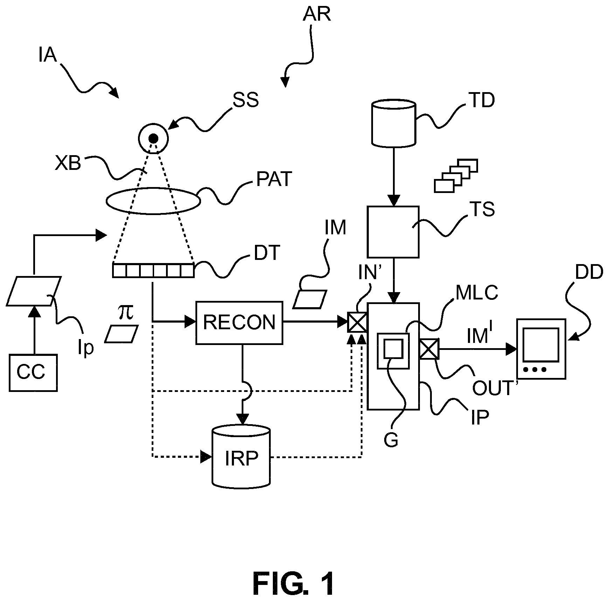

With reference to Figure 1, there is shown a computerized imaging arrangement AR. The arrangement AR comprises, in embodiments, an imaging apparatus IA and an image processor IP. Very briefly, the image processor IP is configured to reduce or remove image artifacts in imagery obtained by the imaging apparatus IA.

The imaging apparatus IA (sometimes referred to herein simply as the "imager") is preferably envisaged herein for medical purposes and is operable to acquire one or more images of a patient PAT. Broadly, the imaging apparatus comprises a signal source SS to generate an interrogating signal XB. The interrogating signal XB interacts with tissue in patient PAT and is thereby modified. The modified signal is then detected by a detection unit DT. The detected signals, such as intensity values, form detector raw data or projection imagery. Projection imagery may be of interest in its own right, but often the projection imagery is further processed by a reconstruction module RECON to produce reconstructed imagery IM.

The imager IA envisaged herein is configured for structural or functional imaging. A range of imaging modalities is envisaged herein such as transmission imaging and emission imaging or others, such as ultrasound (US) imaging. For instance, in transmission imaging, such as x-ray based imaging, the signal source SS is an x-ray tube and the interrogating signal is an x-ray beam XB. In this embodiment, the modified x-ray beam impinges on X-ray sensitive pixels of the detection unit DT. The X-ray sensitive detector DT registers the impinging radiation as a distribution of intensity values. The registered intensity values form projection images $\pi$. The X-ray projection images $\pi$, although sometimes useful in their own right such as in x-ray radiography, may then be transformed into cross-sectional images in CT imaging by the reconstruction module RECON. Specifically, the reconstruction module RECON applies a reconstruction algorithm to the projection imagery, such as filtered back-projection or other algorithms. A cross-sectional image forms a 2D image in 3D space. In CT, a plurality of such cross-sectional images may be reconstructed from different sets of projection images to obtain a 3D image volume. In MRI images, the detection unit is formed from coils, that are capable of picking up radiofrequency signals that represent the projection imagery, from which MRI cross-sectional images may be reconstructed by MRI reconstruction algorithms. The X-ray imagery in CT or radiography represents structural details of the patient's anatomy. In emission imaging, such as PET or SPECT, the signal source SS resides in the patient in form of previously administered radioactive tracer substance. Nuclear events caused by the tracer substance are then registered as projection images at a PET/SPECT detector DT arranged around the patient. A PET/SPECT reconstruction algorithm is then applied to obtain reconstructed PET/SPECT imagery that represents functional details of processes inside the patient, such as metabolic processes.

The imaging apparatus IA is controlled by an operator from an operator console CC. The operator can set a number of imaging parameters $Ip.$ Imaging parameters comprises acquisition parameters and/or, if applicable, reconstruction parameters. The acquisition parameters refer to settings of the imaging apparatus that control the imaging operation, such as X-ray tube settings (amperage or voltage) or similar. A reconstruction parameter on the other hand relates to parameters that relate to operation of the reconstruction algorithm. The reconstruction parameters may not be necessarily set at the operator console, but may be set, at a later stage, at a work station or other computer. In x-ray imaging, acquisition parameters may include any one or more of the following: scan type, body part, XR source (tube) XR settings such as mA, mAs, kVp, rotation time, collimation setting, pitch, etc. "Scan type" can be helical or axial and/or may specify the region of interest (ROI) to be imaged, such as chest, lung, pulmonary embolism, cardiac, etc. "Pitch" is a parameter in multi-slice spiral CT and is defined as the ratio of table increment over detector collimation.

If a reconstruction operation by a reconstruction module RECON is required, such as in CT or MR or in emission imaging (PET/SPECT), this may require the specification of reconstruction parameters to adjust the reconstruction algorithm. Suitable reconstruction parameters envisaged in CT reconstruction may include any one or more of the following: reconstruction filter, reconstruction algorithm (e.g., FBP, iDose or IMR), slice thickness, slice increment, image size (in pixels or voxels, $m \times n$) and field of view, etc.

The acquisition parameters specify how the imaging apparatus is to operate to acquire image signals which are then converted into image values. The reconstruction parameters describe how the image values are converted from one domain (e.g., projection domain) into other image values in a different domain, e.g. image domain. Both parameters, the imaging parameters and/or the reconstruction parameters, are thus influencing the image values or distribution thereof in the imagery.

Unless specifically stated, in the following, no distinction will be made between reconstructed images or projection images, and we will refer thereto simply as input image(s) or "imagery" IM to be processed by the image processor IP. In other words, the image processor IP may be configured therein to operate on imagery from the projection domain or may act on imagery reconstructed in imaging domain.

The input imagery produced by the apparatus IA is received at the imaging processor IP at its interface IN', through wired or wireless communication means. The imagery IM may be received directly from the imaging apparatus, or may be retrieved from an imaging repository IRP where the imagery is stored after acquisition.

In most imaging modalities, for technical, physical or other reasons, the projection imagery, or the reconstructed imagery, may be inflicted by image artifacts. Image artifacts are image structures that do not represent actual structural or functional properties in the imaged object, or the representation in the imagery is somehow distorted or otherwise unsatisfactory. The possibly artifact ridden input imagery IM as received at the input port IN' of the image processor IP is processed into output imagery IM' and is output at output port OUT'. Operation by the image processor causes the artifacts to be reduced or entirely removed. The artifact reduced output imagery IM' may then be mapped on a suitable grey value or color palette and may then be visualized by a visualizing module (not shown) on a display device DD.

The artifact reduction image processor IP may hence assist a diagnostician in properly interpreting the input imagery. The image processor IP may be run on a general purpose computing unit. The computing unit PU may be communicatively coupled to the imaging apparatus or to the imaging repository. In other embodiments the image processor IP is integrated into the imaging apparatus IA. The imaging processor IP may be arranged in hardware or software, or in a combination thereof. Hardware implementations may include a suitably programmed circuitry, such as a microprocessor or microcontroller, such as an FGPA or other general purposes circuitry. Hard coded circuity is also envisaged herein such as an ASICS or on-chip systems, or other. A dedicated processor, such GPU (graphical processing unit), may also be used.

Referring now in more detail to the nature of the imagery to be processed, this can be conceptualized as data structures in 1D, 2D or 3D or even higher dimensions (e.g., time series of images) comprising a plurality of numbers. Depending on the contrast conferring mechanism that underlies the imaging, the numbers represent intensity values of a physical quantity or phenomenon to be imaged. The numbers may be referred to herein as image values. The data structures referred to above may include one or more $n$-dimensional matrices, or "tensors" (n>3). Suitable values for $n$ are 1, 2, 3, 4 or n>4. The image may be greyscale or color. Color imagery may be encoded in an RGB scheme or another suitable encoding scheme.

For instance, the image values may be represented in rows and columns $i,j$ to represent spatially two dimensional structures. Spatially three dimensional image values may be represented as rows and columns $i,j$ and a depth component $k$.

In embodiments, the image may be represented in a 2D structure with rows and columns $i,j$ but the image in fact forms a section or sub-space of a three dimensional volume such as the slice images of a CT 3D volume. Similarly, MRI volumes may also include 2D slice images which are sections in 3D. 2D or 3D imagery acquired through time may be represented as a 3D or 4D image data, respectively, with the third or fourth component representing acquisition time.

Even though the imagery represents 2D structures, at times a higher dimensional representation may still be used such as in color images encoded in RGB. An RGB image may be represented as a three dimensional structure with the two spatial dimensions $i,j$ corresponding to structure or function in the patient, whilst another component represents the red, green and blue image values respectively for any given image location $i,j$. In other words, 2D color image maybe represented as a 3D volume formed by the super position of three distinct 2D images each representing respectively the red, green and blue image values for a given image location.

Accordingly, spatially 3D color imagery acquired through time may thus be represented as a seven-dimensional tensor: three spatial dimensions, three dimensions for the color values, and one dimension for time. A grey value image may be represented without an additional depth component.

Turning now in more detail to the computerized imaging processor IP, this includes in embodiments a pre-trained machine loading component MLC. The pre-trained machine learning component MLC includes a pre-trained machine learning model G. The machine learning model G such as a neural network structure or other has been previously trained by a computerized training system TS to be described more fully below. Training is based on a set ("corpus") of training data TD.

The training data TD includes in particular historic imagery. In embodiments, the training data includes historic x-ray images collected from previous patients. The corpus training data comprises in particular two classes of imagery, those inflicted by artifacts and those that are thought to be artifact free. The artifact free and artifact inflicted imagery may not need to be paired. Also, the imagery does not necessarily have to relate to a particular anatomy but can comprise x-ray imagery of different anatomies or even whole body imageries. Images from the training set TD will be referred to herein as "training input image/imagery".

The machine learning model G is in general operable in two modes, in training mode and in deployment mode. The training mode occurs before deployment mode. The training mode may be a one-off operation but may be done repeatedly. More specifically the machine learning model G comprises an architecture and a plurality of parameters arranged according to the architecture. These parameters are initialized. The training system TS adjusts during training mode the parameters based on the received input training imagery. Once the parameters have been sufficiently adapted in one or more iterations, the so pre-trained model G may then be used in deployment in the machine learning component MLC of image processor IP as mentioned above. In deployment mode, the pre-trained machine learning model G can process the received input imagery to reduce or remove image artifact as mentioned above. Crucially, the input imagery in deployment is not part of the training imagery so that the machine learning model G has never "seen" the input imagery before. After processing and after suitable training, the machine learning model G is capable of transforming the input imagery into an artifact free version IM prime of the input image.

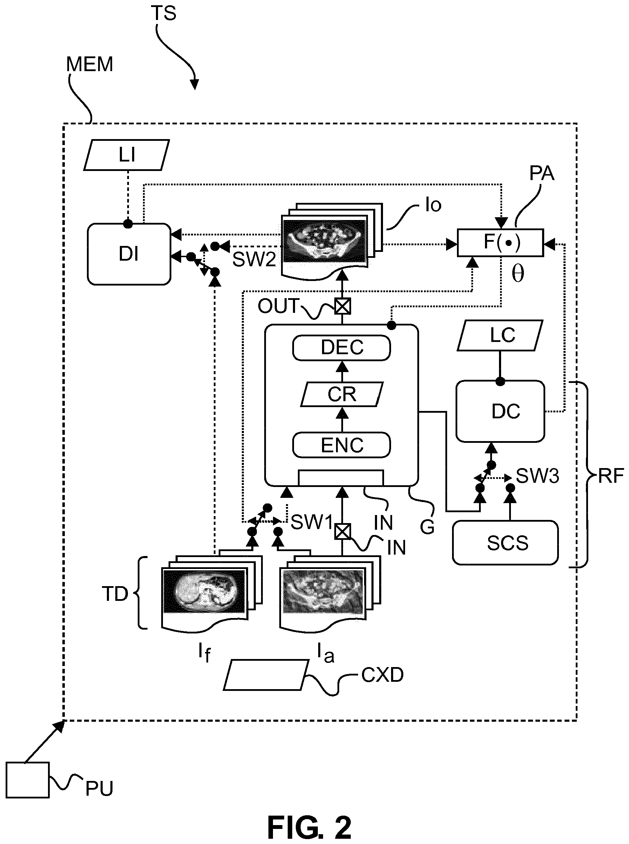

With reference to the block diagram in Figure 2, operation of the proposed computerized training system TS will now be explained in more detail.

The training system TS may reside in one or more computer readable memories MEM. The computerized training system TS may be executed by a processing unit such as general purpose CPU circuitry or, preferably, specialized circuitry such as GPU's or others. The components of the training system TS may be implemented on a single computing device or on a group of computing devices, such as servers and others, in a distributed or "Cloud" architecture connected in a suitable communication network.

The system TS comprises, in addition to the target model G to be trained, two auxiliary machine learning models DI and DC. These are trained alongside the target model G. In parameterized embodiments, some or each of the machine learning models G, DI and DC are initialized with parameters. The parameters of the three models will be collectively referred to herein as a "configuration" of the training system TS. If reference is made to parameters of a specific one of the three models, these parameters may be referred to as a configuration of the respective model. In occasion, we will simply refer to "the parameters" of the respective model.

Broadly, in training mode, training data TD, an artifact free image $I_f$ or an artifact ridden image $I_a$, is fed into the target model G. A parameter adjustment unit PA adjusts the configuration of the training system TS based on the training data TD. Operation of the parameter adjuster PA is driven by one or more objective functions $F$. The adjustment of the configuration is so as to improve the objective function(s) $F$. The parameter adjuster PA computes the adjustment of the configuration based on the current configuration, and the outputs produced by the three models. The parameters of the three models are jointly adjusted. Objectives of the three models are adverse. The objectives formulated in the suitably configured one or more objective function(s) $F$. In particular, the objective in relation to the target model is adverse, or in opposition, to the respective objectives in relation to the other two auxiliary models DI, DC. The objectives will be explained in more detail below.

The target model G is a generator learning model, whilst the other two auxiliary models, DI, DC, are discriminator models. Accordingly, the target model will be simply referred to as the "generator". The two auxiliary models will be referred to herein as the image discriminator DI and the code discriminator DC, respectively, for reason that will become apparent shortly.

Adversarial generator-discriminator set-ups for machine learning are known and have been reported by Ian Goodfellow et al in "Generative Adversarial Nets " ("GAN"), published 10th June 2014, available online at arXiv:1406.2661v1/stat.ML. Like some other approaches, the adversarial generative set-up marries probabilistic concepts with machine learning. Specifically, in the Goodfellow approach, samples from an arbitrary initial distribution are processed by the generator to estimate samples from a target distribution. The discriminator in Goodfellow is used to discriminate between samples ("fake") received from the generator and samples ("real") received from a true data ground truth set. In Goodfellow, the discriminator is trained with an objective to classify the data with high confidence, into real and fake as generated by the generator. The objective of the discriminator is to minimize the classification error rate. Adverse to this objective, the objective of the generator in Goodfellow is to generate data such so as to maximize the error rate of the discriminator, that is, to maximize the probability of that the discriminator makes an error. Put differently, the generator produces more realistic fake data, so minimizes the difference between the distributions of "real data" from a training set and the generated data. Equally, the discriminator maximizes the probability of assigning the correct label (real vs. fake) to the real data from the training set and the faked ones generated by the generator. Both optimizations can be formulated as a mini-max optimization in a two-player zero-sum game, the discriminator versus the generator.

In a distinction to the Goodfellow approach, the adversarial set-up proposed by Applicant herein includes not only a single discriminator but two distinct, different, discriminators DC, DI that are configured each to pursue different objectives, both adversarial to the objective of the generator G. Also, in the presently proposed set-up, the generator G is not fed by samples with an arbitrary distribution such as noise or random values, but is instead fed by the training image data from the training corpus TD that comprises imagery of two categories, namely, artifact free imagery $I_f$ and artifact ridden imagery $I_a$. Providing training imagery in those two categories affords the ability to correctly remove, or at last reduce, artifacts.

Broadly, the proposed generator G transforms the input imagery, either $I_f$ or $I_a$, into a training output image Io which is output at output interface OUT. The dimension and size of the training input imagery is preserved. That is, the dimension and preferably the size (number or rows and columns etc.) of the training input imagery, corresponds, or is equal to, the dimension and size of the training output image Io as supplied at output OUT. However, during the processing of the training input imagery TD, the training input imagery $I_f$, $I_a$ is first transformed into a lower dimensional representation CR by an encoder component ENC of the generator. In addition, also the size may be reduced. This lower dimensional and/or smaller sized representation of the training input imagery will be referred to herein as the "central" or intermediate representation CR. It is intermediate in the sense that it does not form the final output. It is central in the sense that it is formed within the generator during processing. The central representation R is then up-sampled by a decoder DEC component, arranged in series with the encoder ENC, so as to increase the dimension/size of the central representation, so that, eventually, the dimension and/or size of the training output image Io matches the dimension and/or size of the training input image $I_a$,$I_f$. The, in embodiments, lower dimensional and/or smaller sized representation CR may also be referred to herein as a "code", the encoder ENC thus "encoding" the received training input imagery $I_a$,$I_f$, whilst the decoder DEC is operable to recover from that code the training output image Io having the same dimension and/or size as the original training input image $I_a$,$I_f$. There are also embodiments where the encoder ENC generates code of larger size and/or higher dimension than that of the input image to foster over -complete representations as will be explained in more detail below.

If a neural network set-up is used, as indeed envisaged herein in preferred embodiments, the generator G may be implemented as an auto-encoder neural network. In addition, one or both of the discriminators DI, DC may be arranged as respective neural networks ("NN") but this may not necessarily be so in all embodiments. Other machine learning architectures such as support vector machines may also be used instead. In particular, one or both of the discriminators may be arranged as support vector machines ("SVM") instead of as NNs.

A random or deterministic switch SW1 is used to selectively provide the generator G with samples from either the artifact free category IF or the artifact ridden category IA as held in the training set TD. The generator G processes the sample and produces the output training image Io. The image discriminator DI is then provided by another random or deterministic switch SW2 with classification input, that is, either with the training output image Io or with a sample drawn from the true data set DT, in particular drawn from the class of the artifact free imagery If. In particular, the training image, from which the training output image was produced, is so selected by switch SW2. Alternatively, a different sample is so selected. Image discriminator DI then attempts to correctly classify the classification input provided by the switch SW2 into one of two classes or labels LI. LI labels whether the image is real, that is, whether it was drawn from the true data from set TD, or whether it was "artificially" generated by the generator G. We train the discriminator DI to maximize the probability of assigning the correct label to samples from the training data TD without artifacts and samples from the generator G. The image discriminator DI attempts to classify the to-be-classified data received by random switch SW2 into an image generated by the generator G or into one drawn from the training data set TD.

Jointly with training the image discriminator DI in this manner, the code discriminator DC is trained. However, unlike the objective of the image discriminator DC, the code discriminator DC as envisaged herein forms a component of a regularizer functionality RF. The regularizer functionality RF enforces certain regularization objectives. One regularization objective envisaged herein is in relation to complexity of representation of the code CR. In order to achieve robust learning and to combat over-fitting, it is proposed herein that a code of low complexity is favored over more complex codes. The complexity of the representation is measured by a suitably chosen complexity measure. The complexity measure is a function that matches the code to a number that indicates high or low complexity. One such measure envisaged herein is that of sparsity, in particular, but necessarily on all embodiments, sparsity in over-complete representations.

Over-complete representations attracted interest in signal processing theory, particularly due to their potential to generate sparse representations of signals. Such representations differ from the more traditional basis representation because they offer a wider range of generating elements; potentially, this wider range allows more flexibility in signal representation, and more effectiveness leading to exceptional results in various applications like signal extraction and data compression. Over-completeness is obtained when the number of degree of freedom (DOF) in the code is larger than the DOF in the input data. In a neural network setup or other, The proposed method obtains a highly sparse representation using the proposed adversarial process, where the discriminator model DC attempts to discriminate between instances from the generator code and a reference sparse distribution. Several other approaches will be explained in more detail further below.

Turning now in more detail to sparsity, this concept may be elucidated with reference to matrix theory. In matrix representation, a matrix is the sparser the more zero entries it has, or, more generally, the more entries it has that are below a negligibility threshold. More generally still, given any system of basis elements, such as in a finite or infinite dimensional vector space, a representation in that system of basis elements is the sparser the more basis elements have coefficients that are zero, or are below the negligibility threshold.

Over-complete representations can be obtained by configuring the encoder stage ENC of the generator model G to produce a code at a higher dimension and or larger size than the dimension/size of the training input image $I_f, I_a$.

Explaining now in more detail operation of the code discriminator DC, this receives as classification input either the current code CR produced by the encoder ENC of the generator G when processing the training input image to produce the training output image Io, or a code sample drawn from a set of reference codes that have a certain predefined level of complexity, e.g. sparsity. In embodiments, the reference codes are produced by a random sparse code sampler SCS. The "real" code CR or the sample generated by the sample generator SCS is provided selectively as classification input to the code discriminator DC through a further random or deterministic switch SW3. The code discriminator DC then attempts to correctly classify of the received code provided by the switch SW3. The code discriminator thus attempts to classify whether the code provided by the switch SW3 is one generated by the generator G or is one generated by the code sampler SCS. The code label LC produced by the sampler hence labels whether the code CR was generated by the sparse code sampler or by the encoder part of the generator G. It is proposed herein to train the discriminator DC to maximize the probability of assigning the correct label to samples from the sparse code sampler SCS and samples from the encoder part ENC of the generator G. In other words, the sparse code sampler SCS samples a sparse code from an input distribution. The regularization approach based on the code discriminator may be referred to herein as the adversarial sparse regularization scheme. As will be understood from the above, whilst the image discriminator DI is fed with image data, that is, the training output image Io as produced at the output stage of the generator G or with real image data, the code discriminator is fed with code data, that is, the code CR as produced within the generator when processing the training input image or is fed with the reference code.

As mentioned, sparsity is merely one complexity measure envisaged herein and other measures may also be used instead or in addition such as entropy based measures or others. The interaction between the discriminator component DC and the code sampler SCS, forms one component of the regularization functionality.

Other, additional, components of the regularizer functionality RF are also envisaged herein in embodiments. Such a further component of the regularizer functionality RF may include a preprocessing stage (not shown) that prepares the training input imagery in a specific way so as to include noise into the training input imagery. This approach may also be referred to as the auto-mixing approach which is also envisaged as another form of regularization and will be explained more fully below.

In addition, in yet another embodiment of the regularizer functionality RF, explicit analytic regularization is also envisaged. In this direct approach, sparsity may be enforced by including a specific, dedicated, objective function that drives the parameter adjuster PA. In this approach, the "analytic approach", a regularization term is added to the loss function to induce sparsity, where $L_1$ and $L_0$ norms are very effective sparsity regularizers, However, also other norms could be utilized here.

The objective function(s) $F(.)$ of the training system TS is adjusted by parameter adjuster PA through one or more iteration cycles. During the iteration cycles, the configuration may be updated as a whole across all three models or may be updated alternately. For instance, in one cycle the current parameters as per the current configuration of the two discriminatory networks DI, DC are kept constant while it is only the generator's parameters that are updated during one or more follow-up cycles. Then, in one or more cycles, the generator's current parameters are kept constant, and it is the parameters of one or both of the discriminator networks DC, DI that are updated and so forth. The number of iteration cycles are either pre-set or are user adjustable. The iterations may be aborted once a stopping condition is met. A stopping condition may be formulated in terms of a convergence condition. Once the stopping condition is met, training terminates. The generator network G is now considered sufficiently trained. For deployment, the current set of parameters in the encoder G at the end of training, together with the generator's G architecture, may then be copied or transferred to another computing unit, such as to the image processor IP. The generator G hence may no longer need to be embedded in the surrounding framework comprising the two discriminator networks DC, DI. In deployment mode, the generator G can be used as a stand-alone component to remove image artifacts. In deployment mode, the pre-trained generator G processes any newly received image (not from the training set), much like a training input image, to produce an output image that has any artifact therein reduced.

Optionally, the training data TD may not only include image data but also non-image contextual data CXD associated with the respective training images. Contextual data CXD may include the imaging parameters, that is, acquisition or reconstruction parameters, as the case may be. If the contextual data is also fed into the training system TS during training, these are treated and are optimized alongside the image data. As will be explained more fully below, the non-image contextual data CXD may need to be reshaped by a reshaper module RS into suitable "pseudo-images" that are then processed alongside their respective training imagery with which they are associated.

Advantageously, in the proposed scheme, the training data TD are un-paired and only weakly annotated. The annotation is weak because for each image in the training data set one merely needs label whether or not the respective image includes an artifact. The training data is un-paired because it is not required, for instance, that their respective pairs of artifact free and artifact ridden imagery that relates to the same patient or anatomy. In the proposed scheme, what is merely required, is a data set comprising two classes with artifacts and those without artifacts. The imagery should be medical imagery and should relate to a common imaging modality such as x-ray imagery, MR imagery, PET imagery or whatever modality is of interest.

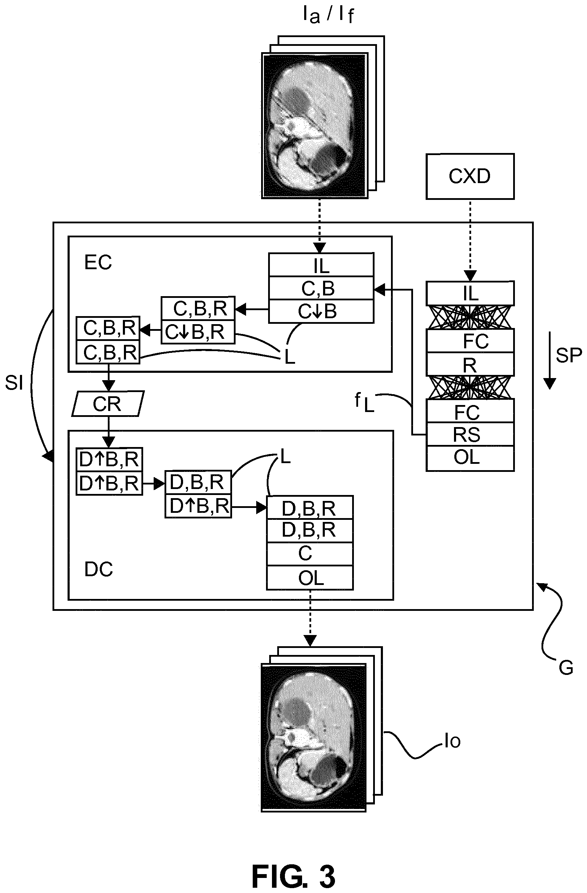

If a neural-network set-up is envisaged, for one, for any two, or for all of the three models G, DI and DC, deep learning networks are preferred. In embodiments, such deep learning set-up includes respective neural networks with one or more hidden layers between respective in- and output layers as will now be explained more fully with reference to Figure 3. This block diagram provides more details of the generator model G presented herein as an auto-encoder in a convolutional neuro-network (CNN) set-up.

The training input data $I_a$ or $I_f$ is processed in a processing path referred to herein as the imaging strand SI. Optionally, if the training is to incudes non-image contextual training data CXD, this is processed in a separate processing strand SP including the reshaper RS. The contextual data CXD may be processed as by the reshaper RS into pseudo-images that are merged with their respective training image data.

Before explaining the architecture of neural network target model G in more detail, some neural network concepts are introduced first to facilitate the further description.

Broadly, the NN structure of the machine learning component includes a plurality of nodes, at least partly inter-connected and arranged in different layers. The layers are arranged in one or more sequences. Each node is an entry capable of assuming a value and/or can produce an output based on input it receives from one or more nodes of an earlier layer.

Each node is associated with a certain function which can be a simple scalar value (node weight) but can also be with more complex linear or non-linear functions. A "connection" between nodes in two different layers means that the node in the later layer can receive an input from the node in the earlier layer. If there is no connection defined between two nodes, no output of one of the two nodes can be received by the other node as input. The node produces its output by applying its function to the input. This can be implemented as a multiplication of the received input by the scalar value (of weight) of the node. More than one input from different nodes may be received by a node in a later layer. The different inputs may be consolidated by a consolidating function g to produce a consolidated value and it is this consolidated value to which the receiving node applies its own function *f* to produce the output for the node. For instance, g may map the received inputs from earlier nodes into a sum of products (e.g., dot product) and the node's function f may then be applied to said sum of products.

A connection may have its own weight ("connection weight"). The weight is used to weigh output that travels along that connection. The consolidated function may combine all the received input for a given node using the connection weights to produce the consolidated dot product output. The connections between layers may be fixed or may vary during processing. Some layers may be fully connected whilst others may not be. Two layers are fully connected if each node in the later layer is connected with all nodes of the previous layer. In partially connected layers, not all nodes in the later layer are connected to all nodes in the earlier layer.

The outputs of all nodes of a given layer may be referred to herein as the "output of the layer" and the inputs received from an earlier layer may referred to herein as "the input of the layer".

Each layer may be represented as a matrix of two, three or higher dimensions. If the dimension is three or higher, the matrices are commonly referred to as a tensor. The nodes implemented as entries in those matrices or tensors. Each layer has a size (rows $i$ and columns $j$), a depth $k$ (which may be larger than 1) and possibly further dimensions. Alternatively, the size, depth and the one or more further dimensions may be realized by other data structures than matrices or tensors.

Target model G in a neuro-network structure includes one or more initial input layers IL and one or more final output layers OL. The initial input layers IL are where the initial image $I_f, I_a$ and, optionally, the contextual data *CXD* is received, by populating the nodes or by presenting the final result for further proceeding by the conversion circuity CC or other, respectively.

The layers L, as shown in Figure 3, are arranged in a deep architecture. The architecture includes one or more hidden layers between the output layer(s) OL and the input layer(s) IL. The number of hidden layers defines the depth of the network G. For instance, a single hidden layer envisaged in some embodiments amounts to a depth of "one". Preferably, however, there are at least two hidden layers used. Preferably, there is an even number of hidden layers, such as 4, 6, or more. The input received from an earlier layer at a hidden layer will be referred to as an intermediate input, whereas the output produced by the hidden layer passed on to a subsequent hidden layer will be referred to as an intermediate output.

In general, in the NN architecture of model G the training input data IM, such the training input image, is applied as initial input at the one or more input layer(s) IL. The data is then sequentially transformed as the data (image IM or parameter *Ip*) passes through the layers in sequence. At each layer an intermediate output is produced which then serves as intermediate input for the next layer etc., at each instant the respective layer acting of the received intermediate input by applying thereto an operation until a final result emerges at the one or more output layer(s) OL. The NN architecture, envisaged herein is preferably of the feed-forward type where, as described above, the data propagates forward from layer to layer. Alternatively, recurrent architectures may also be envisaged herein, where one or more layers are revisited during processing.

Different types of layers L may have different functions and hence apply different operations. We now turn first to discuss the different types of layers, some or all envisaged herein in different combinations and sub-combinations.

NN layer types envisaged herein include any one or more, or all of the following in combinations: fully connected layers FC, convolution layers C, deconvolution layers D, up-sampling layers ("↑"), down-sampling layers ("↓"), activation layers R as shown in Figure 3. The layer types are grouped into units to form various operational units, for each scale level $s$. For example, deconvolution or convolutional layers may be combined with an up-sampling or down sampling layer and an activation layer. For instance, the expression "C, ↓, R" in Figure 3 indicates a group of layers, arranged in sequence as a convolutional layer C followed by a down-sampling layer ↓, and then by an activation layer R a rectifier unit R. Although grouping layers into such units of 2, 3 or more layers can have implementational advantages when expressed as matrices/tensors and matrix/tensor multiplications, the grouping is not necessarily envisaged in all embodiments.

Turning now in more detail to the activation layer R, this may be implemented using any non-linear function, including logistic-based sigmoid functions, *arctan, softmax,* rectifier function ($x^+=max(x,0)$), or others. A layer that implements the rectifier function may be called a rectified linear unit (ReLU). The activation layer R implements a nonlinear function that is applied to the values in each node to introduce a non-linearity to enable the MLC to capture nonlinear pattern. The size of the (intermediate) input layer is preserved by the rectifying layer R. Layer R also serves as an "importance filter" to remove or mitigate an input if this is below a threshold. An input from a node may be completely annulled and hence not forwarded at all to the next layer despite there being a connection. The node is then said not to "fire" and this event is then recorded by forwarding "zero" to the next layer. The proportion of not firing nodes in a given configuration may be expressed as the sparsity of the MLC.

In addition or instead of ReLUs, drop-out layers may be used in embodiments. These layers also introduce non-linearities by randomly cancelling connections between nodes of two layers.

Turning next to fully connected layers FC, the layers envisaged herein in MLC are not necessarily fully connected although in embodiments the network MLC does include two or more fully connected layers. Fully connected layers are shown as FC in Figure 3 above. The fully connected layers FC represent more traditional, non-convolution NN components where each node is associated with its activation function and a weight. The activation function for each node may be organized into a separate operational layer. Each node in one layer of the FC receives an input from all nodes in the previous layer each weighted according to the respective weight for the connection, as explained above in the general introduction. This total input is then summed and evaluated by an activation function layer R. The activation function layer is applied to the weight of the respective node to produce a node output which is passed onto nodes in the subsequent layer. The advantage of using FCs are to model more complex, non-linear patterns.

The convolutional layer C and de-convolutional layers D (and/or the up sampling or down sampling layers) are examples of non-fully connected layers. More particularly, these layers are not fully connected to all nodes of the earlier layer. In addition, the connections vary when processing the (intermediate) input from the earlier layer.

In convolution layer C, each node of the intermediate output is obtained by convolving the convolution layer with a sub-group of nodes of the earlier layer, thus involving only a sub-set of all possible connections. The connections are then redefined to single out a new group of nodes for the next intermediate output layer and so on, until the whole (intermediate) input layer has been processed.

The convolutional layers C may be structured as matrices with size preferably odd-numbered, such as *3x3* or *5x5* with a center position. The convolutional/de-convolutional layer may also have a depth that corresponds to that of the depth of the intermediate input to which it should be applied.

The size of the convolutional/de-convolutional layer is in general smaller than the size of the intermediate input on which it acts. Just like in conventional convolution, the convolutional layer may be conceptually thought to slide over its (intermediate) input layer and is applied selectively to different groups of nodes to produce filtered nodes as an (intermediate) outputs. The convolving operation itself may involve forming sums of products between the nodes of the convolution layer and /or all nodes within the instant group in its intermediate input layer. The filtered node is the central node of the odd-sized matrix of the convolutional layer.

The shifting to a new group of nodes in the processing of the convolutional layer may be conceptually understood as a sliding the convolution layer C with stride=$n$ ($n$ being a natural number) over the (intermediate)input to produce the (intermediate) output for each group nodes, respectively. The stride is a design parameter of the CNN that indicates the extent of each shift. For instance, stride $n$=1 means that the new group is obtained by effectively shifting the layer C by one node when redefining the connections for the next group of node whose values are to be convolved to obtain the value of the next (intermediate) output node. For stride $n$=2, one column or row of nodes is skipped and accordingly for n>2. It will be understood that, instead of the sliding window approach described above, the input layer to be processed by the convolution layer may be instead broken up open into parts (tiles), and each of these are then convolved with the convolution layer separately.

Zero padding may be used if the convolutional layer extends beyond the outermost nodes of its intermediate input layer on which it acts. The convolutional/de-convolutional layer may be applied in sequence as described or may be applied in parallel in the whole of the intermediate input layer.

The de-convolutional layer D is essentially an inverse operation to the convolution caused by the convolution layer C. Whilst the convolution layer maps, initially, from pixels to features of progressively higher level, the deconvolution operation maps features back down to pixels. Functionally, the deconvolution can be formulated in terms of convolution operations as used in the convolution layer discussed above which are then summed. See for instance section 2 in M D Zeiler et al in "Adaptive Deconvolutional Networks for Mid and High Level Feature Learning", 2011 International Conference on Computer Vision, Barcelona, Spain. The de-convolutional layer D may also be represented as a matrix with appropriate depth.

As such, the convolutional and de-convolutional layers do in general preserve the size of their (intermediate) input.

The down sampling layer is similarly structured as the convolutional/de-convolutional layers C, D, but they act on its input data differently. The down-sampling/up-sampling layer (also referred to herein as simply "down"-or "up-samplers") may be odd- or even-sized. The down sampling layer lumps together a group of nodes in the earlier layer to produce a single node for the subsequent output layer, thus reducing the spatial (less rows and/or columns) of the (intermediate) input layer. This can be done by forming an average or by picking the maximum/minimum value or any other designated value from the group of nodes covered. The size of the group corresponds to the size of the down sampling layer.

The up-sampler acts quasi-inversely to the down-sampler and produces at its output a larger set of nodes, preferably by interpolation between input nodes. Convolution/Deconvolution and the up-sampling/down-sampling functionality may be combined in the same layer. For instance, convolution and down-sampling may be achieved as a convolution with stride >1, such as 2 or larger. In a similar fashion, the deconvolution may be combined with the up-sampling functionality.

Further layer types may include batch normalization layers B. These layers implement a normalization of gradients in the previous layer. This normalization prevents or reduces gradient saturation. In gradient saturation, gradient magnitude reduces too rapidly during iterations. Similar batch normalization layers have been described by Sergey Ioffe et al in "Batch Normalization: Accelerating Deep Network Training by Reducing Internal Covariate Shift", available online T arXiv:1502.03167v3 [cs.LG] 2 March 2015.We will now turn to explaining in more detail the processing of image data in imaging strand SI of generator model G. In general, in image strand SI, the number of up sampling layers in decoder stage DEC corresponds to the number of down sampling layers in the encoder stage ENC. In one embodiment the encoder ENC of SI includes three down sampling components and the decoder DEC includes three up sampling components. The same may hold true for the convolution/deconvolution layers C, D. In Fig 3, the layers L are grouped into units. This grouping is conceptual rather than implementational. The logic of the grouping in Fig 3 is that each unit causes a down- or Upsampling.

Generally, in some embodiments, the last layer L in encoder ENC is a downsampler ↓ to arrive at the low dimensional representation CR and this is then followed in the decoder section DEC by at least one upsampler ↑. The last layer downstream layer in the encoder ENC provides the central representation CR in form of a two or higher-dimensional matrix with entries. The more zero or negligible entries there are, the sparser the code CR, and this is preferred. More generally, there is at least one downsampler in the encoder END section, and there is at least one upsampler in the decoder DEC section. This "bottleneck structure" allows implementing the encoding/decoding principle in autoencoder based embodiments of model G. Alternatively, over-complete variants of the AE architecture are also envisaged herein, where there is not necessarily a spatial down/upsampling, but where instead sparsity-based regularization is used, of which more further below. In alternative embodiments, there is no such bottleneck, but the encoder ENC performs one or more upsampling operations and then the decoder performs a corresponding number of downsampling operations, so as to achieve an over-complete representation where the code CR has a higher spatial dimension than the training input image $I_a, I_f$ and the training output image Io. This autoencoder embodiment with over-complete embodiment is preferably used with sparsity enforcement by regularizer functionality RF, as will be explained in more detail below.

In addition, there may be at least one convolution layer C in the encoder ENC section and at least one deconvolution layer D in the decoder DEC section. The order of convolution and downsampler in the encoder stage ENC is preferably convolution first and then downsampling but this may not necessarily be so in all embodiments. Similarly, in the decoder DEC section there is deconvolution first and then upsampling although this order too may be reversed in embodiments.

To be sure, the processing sections ENC and DEC are conceptually inverse, but will in general not yield unity, so $ENC^{-1} \neq DEC$.

In embodiments, the encoder ENC of SI includes three-layer units. Each unit comprises, in sequence, a convolution operator followed by another convolution, a down sampling and a rectification R. More or less than three of such units may be used instead in alternative embodiments.

In embodiments, in the decoder section DEC, the convolution layers C have size *n x n x d* (or larger), preferably each followed by a rectified linear unit (ReLU). The spatial dimension could be any suitable number, such as 3,5, etc. whilst the depth *d* is a function of color channels (if any) and the number of channels required for the reshaped contextual parameters CXD, as will be explained in more detail below in relation to reshaper strand SP. Two or more convolutions layers C may be used to change scale. The last convolution of each scale may be done with stride 2 for down-sampling/downscaling. In the embodiment of Fig 3, three feature scales are realized as there are three pairs of up/and down-sampling operations in DEC and ENC, but, in alternative embodiments, more scales, or less scales are also envisaged.

The decoder DEC section of strand SI may complementary mirror the structure of the encoder section ENC and includes correspondingly the same number of units, but in each unit, each occurrence of convolution is replaced by de-convolution layer and each occurrence of a down sampling layer is replaced by an up-sampling layer. The last, downstream, layer in the decoder DEC preferably ensures that the final output may also allow zero nodes. For otherwise, one is limited to larger than zero values because of the preceding activation layer R. This last layer may be implemented as shown as an additional convolutional layer C to provide the final decoding result, but this may be optional. Preferably, this last convolution has size *1x1x1*.

In embodiments, in the decoder DEC 3x3x3 (or larger filters) deconvolution layers D are used, preferably each followed by a rectified linear unit (ReLU). Two or more deconvolution layers D may be used to reverse scales as changed in the encoder ENC. The last deconvolution of each scale is done with stride 2 for up-sampling/upscaling. The number of scales in the decoder section DEC section is usually equal to the number of scales in the encoder ENC section.

Preferably but not necessarily in all embodiments, a typical number of convolution filters in each layer in scale *s* is $(2^3)^s c$, where $s = 1,2,3,...$ is the scale (the input scale equals 1) and *c* is a network control parameter, where we found that usually the best performance is obtained in an over-complete setting, in which $c > 1$.

Other combinations or other arrangements of functional layers in the two sections DEC and ENC of the SI are also contemplated herein, but preferably the number of up sampling and down sampling layers and/or the convolution and deconvolution layers in the two sections DEC, ENC are, respectively, the same.

Optionally, some or each of the units may include one or more batch normalizers B arranged between a convolution C or deconvolutional D layer and an activation layer R.

We now turn now in more detail to optional reshaper RS and the processing of non-image contextual CXD in contextual data processing strand SP, where, for instance, the imaging parameters, acquisition parameters, or patient descriptive data (age, sex, patient history, etc.) maybe processed. The reshaper strand SP includes, in embodiments, three hidden layers. Specifically, there is envisaged, in sequence, a fully connected layer FC which is followed by a rectification layer R which is in turn followed by a second fully connected layer FC. A single fully connected layer may be used instead, or more than three hidden layers, in particular more than 2 FCs, may be used.

Functionally, the imaging parameter strand SI is configured to act as a reshaper of the set of imaging parameters. In other words, at output OL of strand SP a "pseudo-image" is formed based on the contextual date CXD received at its input layer IL. The imaging parameters are reformatted into a matrix/tensor with size equaling the input image IM. This pseudo-image is then merged as indicated by arrow $f_L$ (or "feedline") with the initial image data IM received at the input layer IL of the SI strand.

Convolutional layers have a certain depth and can act on a multi-dimensional layer. The depth of convolution may correspond to the number of channels of the imagery to be processed. For instance, a convolutional layer applied to a color image may have a depth of three so as to serve each of the three color channels RGB. The convolution operations in each of the three layers may be different for each channel.

In embodiments, it is proposed herein to include the reshaped image parameters (that is, the pseudo image) as additional channels into the input imagery $I_f, I_a$ and to configure the convolutional/de-convolutional layers in the SI section to have an additional depth that is configured to process the pseudo-image that is the reshaped image parameters. In this sense the imaging parameters and the actual image data in $I_f, I_a$ are merged into a multi-dimensional compounded image where the imaging parameters are included as an additional dimension or layer into the actual image data. This allows the compounded image to be processed by multi-channel convolutional/de-convolutional layers whose depth corresponds to the actual dimensions of the image data $I_f, I_a$, plus one (or more) dimension(s) for the imaging parameters.

In embodiments, the reshaper SP reshapes the output of the last fully connected layer FC to a representation of one or more matrices or volumes or tensors, which may be called herein an "imaging parameter volume" or "pseudo-image". The size of each imaging parameter volume equals the size of the input image $I_f, I_a$. The imaging parameter volumes are fed in additional channel(s) to the imaging strand IS. The number of additional channels corresponds to the number of imaging parameter volumes produced by the reshaper SP. The feeding-in into the strand SI may be done by populating each output value of the last fully connected layer FC to a separate imaging parameter volume, where in each case, the respective entire volume is filled-up by the same output value. Other embodiments of merging image data V with non-image data *CXD* are also envisaged. Using the above described multi-channel technology in the context of CNNs is merely one embodiment. However, similar applications of the above merging technique in more general NN or non-NN contexts are also envisaged herein.

The imaging parameters, as applied to the input layer of strand SP, may be represented in one or many more dimensions. The imaging parameters are preferably encoded in a suitable numeric format or may be so mapped from classes to numeric values. The imaging parameters provided as one or more vectors or matrices at the input layer IL in strand SP of network MLC. The dimension of the vector or matrix, or indeed tensor in general equals that of the image data IM.

The architecture of the discriminator models DC, DI may also be arranged as neural network layers. In general, the last layers of the discriminator DC, DI, equal the number of classification classes. In embodiments, the output layers include respectively two nodes. Specifically, the two nodes in the image discriminator DI represent the respective probabilities of whether output training image has been drawn from training corpus or has been generated by generator G, respectively. The two nodes in the code discriminator DC represent the respective probabilities of whether the code to be classified has been drawn from the set of reference codes (as provided for instance by sparse coder sampler SCS) or whether the code has been generated by the encoder ENC stage of the generator G, respectively. The input layer of image discriminator DI corresponds to the size of the training output image and the size of the code discriminator DI is suitably sized, so as to receive a code description. In other words, the input layer corresponds to the size of the output layer of the encoder ENC stage. For discriminator architectures as envisaged herein, it is preferred to replace pooling layers with strided convolutions layers and/or to use batch normalizer layers. Preferably, no fully connected layers are used. ReLu activation layers may be used, expect for the output layer where a hyperbolic (*tanh*) activation is used. So called leaky rectifier layers maybe used. These type of activation layers have been described by Andrew L. Maas et al in "Rectifier Nonlinearities Improve Neural Network Acoustic Models", in Proc. ICML, vol. 30, 2013. Principles of discriminator architectures have been described *by* Alec Radford and Luke Metz et al in "Unsupervised Representation Learning with Deep Convolutional Generative Adversarial Networks", available online at arXiv:1511.06434 [cs.LG].

Referring now to operation of the parameter adjuster PA, this is configured to update or to adjust the configuration of the training system TS so as to improve one or more objective functions $F(.)$. The respective objective functions for each of the three models are improved jointly or separately. Some or all of the three objectives in relation to the three models G,DI,DC can be combined into a single objective function.

The adjustment of the objective function may be formulated for the respective models G, DI, DC as a utility or cost function. The parameter adjuster PA is configured to adjust, in given iteration, the current configuration to as to increase the utility and/or to decrease the cost, thereby attempting maximization and/or minimization, respectively. The combination of the objective functions for the respective models into a single objective function can be done multiplicatively or additively. Preferably it is done additively as will be explained below in more detail.

Broadly, the objectives as represented by the one or more objective functions can be divided into an objective function in relation to the generator G and respective objective functions for the code discriminator DC and the image discriminator DI.

The objective for the code discriminator is configured to produce outputs that fool the two discriminators so as to maximize their error rate. Adverse thereto, the objective functions of the two discriminator models are optimized so that their classification error rate is minimized.

In addition, the objective function for the generator may include fidelity requirements as the generator is expected return a faithful copy of a training input image if the training input image did not include any artifacts, and the generator is also expected not to change those regions of an artifact ridden training input image that are not part of the artifact in that image.

As the optimization proceeds through the iterations, G produces more realistic images without artifacts. The parameter adjuster PA attempts to adjust the parameters of the discriminators DI, DC so as to maximize the probability of assigning the correct labels, input label and co-label respectively. Adverse hereto, the parameter adjuster PA is attempting to adjust the parameter of the generator so as to fool the discriminator, that is, to reduce the classification probabilities of the two discriminators DC, DI to about 50%. Conceptually, this may be understood as a convergence, in the iterations, towards an equilibrium where the three objectives are balanced. In this conceptual 50%-balance, the generator manages to produced training output imagery that is practically indistinguishable from the real samples drawn from the training corpus and also the code that is produced by the generator as the output stage of is encoder has a sparsity practically indistinguishable from the sample code generatable by the sampler SCS. That is, in about 50% of the case, the generator will generate code at the required level of sparsity and it will produce training output imagery that "looks" as it was drawn from the training sample corpus TD. In yet other words, once the optimization converges, the probability distribution of images generated by the generator G is substantially equal to the probability distribution underlying the corpus of training sample TD.

As the optimization proceeds, G produces more realistic images without artifacts and the discriminators ($D_I$ and $D_C$) maximize the probability of assigning the correct labels (image label and code label). These two conflicting objectives between the mode G and models DC,DI can be thought to leads to a convergence to an equilibrium, where $G$ produces images without artifacts and the discriminators can at best randomly guess the labels. In the optimization, $D_I$ and $D_C$ are optimized to maximize the probability of assigning the correct label as defined by image label and code label, respectively, where the configuration of G, DC and DI, optimized to improve the following min-max cost function in two two-player zero sum games of G versus DI and G versus DC, respectively.

In general, in embodiments includes two types of term: one or more terms, referred to herein as fidelity terms, that quantify well G reproduces the training input imagery. In addition, there are terms measure performance of the discriminators DI,DC to assign the correct labels. Optionally, there may be one or more terms that promote low code complexity, such as low sparsity, of the encoder ENC stage output in the generator G.

More specifically, in embodiments, the objective function $F$ may be configured as:

$$\min_{\theta} \max_{\theta'} F(\theta, \theta', I, I', S) = \sum_{i=1}^{n} \left( \lambda_1 \|I_i - G(I_i)\|_{q_1} + \lambda_2 \|I_i' - G(I_i')\|_{q_2} + \lambda_3 \|G_E(I_i)\|_{q_3} + \right.$$

$$\left. \lambda_4 \mathbb{D}\{D_I(I_i), D_I(G(I_i))\} + \lambda_6 \mathbb{D}\{D_C(S_i), D_C(G_E(I_i))\}\right)$$

$$(1)$$

wherein:

$I$ and $I'$ are the set of input training images/volumes without and with artifacts, respectively; $S$ is a set of reference samples generated by the sparse code sampler;

$q_k$ represents a similarity measure, such as the $q_k$ norm, with $q_k$ =1,2,.. $\theta$ are the parameters vector of G and $\theta$ are the parameters of DC, DI, with $\theta$ and $\theta$ defining the configuration of training system TS; and wherein

$G_E$ is the encoder part ENC of network $G$ which generates the code CR.

The $\lambda$'s are control factors that control the contribution or "strength" of the respective term to the total cost $F$. The factors are optional. Some or all control parameters may be unity. The factors $\|I_i - G(I_i)\|_{q_1}$ and $\|I_i' - G(I_i')\|_{q_2}$ are fidelity terms. The fidelity term $\|I_i' - G(I_i')\|_{q_2}$ enforced preferably a local correspondence whilst for artifact free samples as measured by $\|I_i - G(I_i)\|_{q_1}$ a global correspondence is encouraged. This local versus global correspondence may be implemented by reducing the strength of factor $\lambda 2$ relative to the artifact free control factor $\lambda 1$ and/or by choosing different norms for the two terms. For instance, $q_1$=2 and $q_2$=1. The L$^1$ norm could be used to promote sparsity. This setting could be more permissive to sparse regions, e.g., the artifact regions in $I'$, as these regions may be allowed to be considerably different than $G(I')$, while in the rest of the image the difference will be small.

The term $\|G_E(I_i)\|_{q_3}$ is an optional, explicit, that is analytic, regularizer term that promotes encoder stage $G_E$ to produce low complexity code, e.g. sparse code. The $q_k$-norm may be used for regularization such as the $L^1$ norm, $q_3$ = 1.

The probabilistic distance measure $\mathbb{D}\{\cdot,\cdot\}$ measures the distance between the sample probability distribution generated by the respective discriminators DC(G), DI(G) given a generator G. The distance $\mathbb{D}\{\cdot,\cdot\}$ may be formulated in terms of probabilistic expectation, such as cross-entropy or other. Different such measures may be used for DC,DI, respectively, or the same measure is used as in eq. (1).

The minimization is done over $\theta$ to adjust G and the maximization is done over $\theta$ for the discriminators DI,DC. The min and max operations may alternate by holding the parameters of G or DI, DC constant in turns while adjusting the others as mentioned above. Each term in $F$ in (1) may be considered an objective function in its own right. Each such objective is additively combined into the single objective function $F$ as in (1), but each may be optimized (maximized or minimized) separately in embodiments. It will be understood that herein each maximization can be dualized into an associated minimization and each minimization can be dualized into an associated maximization, such dual formulations of (1, and of all functions below, being envisaged herein in embodiments.

In embodiments, (1) maybe configured as:

$$\min_{\theta} \max_{\theta'} F(\theta, \theta', I, I', S) = \sum_{i=1}^{n} \left( \lambda_1 \|I_i - G(I_i)\|_{q_1} + \lambda_2 \|I_i' - G(I_i')\|_{q_2} + \lambda_3 \|G_E(I_i)\|_{q_3} + \right.$$

$$\left. \lambda_4 \log(D_I(I_i)) + \lambda_5 \log(1 - D_I(G(I_i))) + \lambda_6 \log(D_C(S_i)) + \lambda_7 \log(1 - D_C(G_E(I_i)))\right)$$

$$(2)$$

In (2), the measure $\mathbb{D}$ has been formulated in terms of cross-entropy. Other formulations in terms of other measures, such as other variants of the as Kullback-Leibler divergence or others still are also envisaged herein.

Yet more specifically, (3) may be configured in embodiments as:

$$\min_{\theta} \max_{\theta'} F(\theta, \theta', I, \tilde{I}, M, I', \tilde{I'}, M', S) = \sum_{i=1}^{n} \left( \lambda_1 \left\| I_i - G(\tilde{I_i}) \right\|_{q_1} + \lambda_2 \left\| I_i' - G(\tilde{I_i'}) \right\|_{q_2} + \right.$$

$$\lambda_3 \left\| G_E(\tilde{I_i}) \right\|_{q_3} + \lambda_4 \log(D_I(I_i)) + \lambda_5 \log\left(1 - D_I\left(G(\tilde{I_i'})\right)\right) + \lambda_6 \log(D_C(S_i)) +$$

$$\left. \lambda_7 \log\left(1 - D_C\left(G_E(\tilde{I_i'})\right)\right) \right)$$

$$(3)$$

wherein:

$\tilde{I}$ and $\tilde{I'}$ are obtained based on $I$ and $\tilde{I}$, respectively, using the automixing approach;
$M$ and $M'$ include the contextual data CXD such as any one or more of: imaging parameters, reconstruction parameters and patient data of $I$ and $\tilde{I}$, respectively.

As mentioned, the automixing ("~") is optional in (2), and each occurrence of the tilde "~" operator in (2) may be removed. No sparsity enforcement over and above the function of the code discriminator DC is used in some embodiments. In eq (4), the contextual data $M$ is merged with the respective image data I, I'. M is not explicitly annotated on the right side in (2). The contextual data M is optional.

The Sparse code sampler SCS may be implemented so as to sample a sparse code from an input distribution. In embodiments, a $k$-dimensional sparse code sample X is generated as follows, where k corresponds to the dimension of G's encoder ENC output. In a first step vector is sampled as $X \sim N_k(0,I)$. Then, a scalar value $n$ is sampled as $n \sim N(\mu_n, \sigma_n^2)$. Then, a vector $S \sim U_{[n]}\{1,k\}$ is sampled as the sparse code that may serve as a reference code for code discriminator DC. That is, vector $S$ consists of "round(n)" samples from the discrete uniform distribution U{1, $k$}, where "round(n)" is rounding to the nearest integer. Then, $X = abs(X\sigma_x + \mu_x)$ and $X[S] = 0$, i.e., for i=1 to round(n), X[S[i]]=0. $\sigma_x$, $\mu_x$, $\mu_n$ and $\sigma_n$ are input parameters. In this exemplary random embodiment, the sparsity is determined by the the n samples out of k, with $\mu_n$, $\sigma_n^2$ determining the level of sparsity. Other sparsity code generators based on drawing from random distributions are also envisaged.

In addition to or instead of the regularization functionality as implemented by the sparse code sampler, additional explicit regularization may be achieved by using an auto-mixing approach where input imagery is corrupted in the training session's specific setting that encourages sparse codes or representations. In equation (2) this is indicated as the prime (" ' ")-operator, but these terms are optional.

Turning in more detail to the "auto-mixing" approach, in this embodiment of an implicit regularization functionality, a given input image $V_i$ is mixed with other imagery from the corpus TD to obtain a mixed image $V_i'$. The model G is then optimized to recover the given training image from the mixed image during training. In other words, in training, $V_i'$ is chosen as input and the "uncorrupted" image $V_i$ the target. More specifically as envisaged herein, for a given training image $V_i$:

$$V_i' = V_i + \alpha V_j + \beta,$$

$$(4)$$

Where $V_i'$ is a combo-image combined from additional component images where $V_j$, $V_i$ from the training corpus that may be randomly selected, and $\alpha$ and $\beta$ are mixing parameters, where usually $0 < \alpha < 1$. More than one additional samples may be used. $\beta$ is an optional parameter that may be used to ensure conformity with certain units, such as HU (Hounsfield units) or other.

The auto-mixing may be understood as a target corruption to foster sparsity. The corruption could be done once, or it could be done again for each epoch (cycle over complete corpus of training images). The so corrupted samples $V_i'$ or combo-image are used to train the network MLC.

The auto-mixing is achieved in embodiments by linear combination or by affine combination, as illustrated above. It will be understood, however, that other functional combinations may be used instead, rather than affine or linear ones.

The component images $V_j$ that are auto-mixed with the first image $V_i$, may be selected from slice images from different $z$ positions from the same CT volume for example. For instance, if $V_i$ is associated with position $z_i$, then the component images may be drawn from $n$ follow up positions at $z_k > z_i$, $k=1...n$. Alternatively, the component images $V_i$, $V_j$ may be drawn for previous positions $z_k < z_i$. As a further alternative, one or more component images are drawn from $z_k < z_i$ and other, one or more are drawn for $z_i < z_k$.

In yet other embodiments, the mixed-in images are images obtained at different times, as recorded in time series $t$ image data, such as (2D,$t$) or a 4D volumes. As above in the spatial embodiments, a given image at time $t_1$ may be mixed with chronologically earlier, or later component images, or with both.

The auto-mixing embodiment may also be used in other neural network architectures than the one in Figures 2,3.

Any numerical optimization scheme can be used to turn an optimization of the above objectives (1)-(4) into algorithmic steps the parameter adjuster PA in embodiments, gradient descent methods can be used to obtain the parameter adjuster. Specifically, in case the three models are arranged as neural-networks, the backpropagation method may be used. Briefly, and as described elsewhere, backpropagation proceeds in two passes. In a first pass, an item of training data such as a training input image, with or without its contextual data, is forward "propagated" through the models given a current configuration. This yields training the training image $I_o$ and labels as produced by the two discriminator. A cost or utility is incurred as measured by the objective function it is then incurred, and it is examined which nodes in the models contributed more to the respectively observed cost or utility. This step can be done by examining gradients of the objective functions and the weights of the nodes are adjusted in a second pass, the backpropagation step, in proportion to their respective contribution to the cost or utility. Such backpropagation methods have been described elsewhere, for instance, in David E Rumelhart et al. in "Learning representations by back-propagating errors". Nature, vol 323, pp 533-536, 1986.

Herein, further optimization scheme specifically geared to GANs are also envisaged such as described in Martin Arjovsky et al, "Wasserstein gan", available online arXiv preprint arXiv:1701.07875 (2017) or in Guo-Jun Qi, "Loss-sensitive generative adversarial networks on Lipschitz densities" arXiv preprint arXiv:1701.06264 (2017). Specially, in embodiments, a Wasserstein GAN formulation is used for the measure $\mathbb{D}$. In addition or instead, as proposed by Guo-Jun Qi, the parameter adjuster PS is to adjust the model parameters so that a Lipschitz condition is fulfilled.

In embodiments where the autoencoder model is used for the generator G, or, more generally, where an "encoder decoder architecture" like neuro-network is used, it is preferable to have the above discussed bottleneck structure with the imaging strand IS including at least one down sampler arranged upstream the upsampler, so that the (central) representation CR for the training input image has a smaller dimension than the input image. This forces the autoencoder AE to produce a representation that may capture at a sufficiently general level, patterns or features which are thought to constitute artifacts.

However, as has been found herein, the auto encoder scheme can also be used with over-complete network architectures, where the hidden layer, in particular the last layer of the encoding section ENC, is spatially or dimensionally larger than the input image. When such over-complete versions of the autoencoder G are used, it is preferable to apply a sparsity scheme to prevent over fitting and provide results that generalize well. In this embodiment the above described auto-mixing preprocessing has been found to be of benefit but other sparsity schemes (also explicit ones) may be used instead or in addition. In more detail, in autoencoders with such over-complete representation, the dimensionality changing actions of the encoder ENC and the decoder DEC are reversed relative to Fig 3. Specifically, in such an autoencoder model G, the encoder ENC upsamples the training input image to achieve a code CR with higher spatial dimension or larger size than the training input image, and it is the decoder DEC that then downsamples the code CR so that the training output image Io has again then same spatial dimension and size as the training input image. Preferably, in autoencoders with over-completeness, strong sparsity enforcement is used, including the code discriminator DC and preferably one or more of the above described sparsity schemes, including one or more sparsity controlling analytical terms in the objective function, or using the automixing scheme.

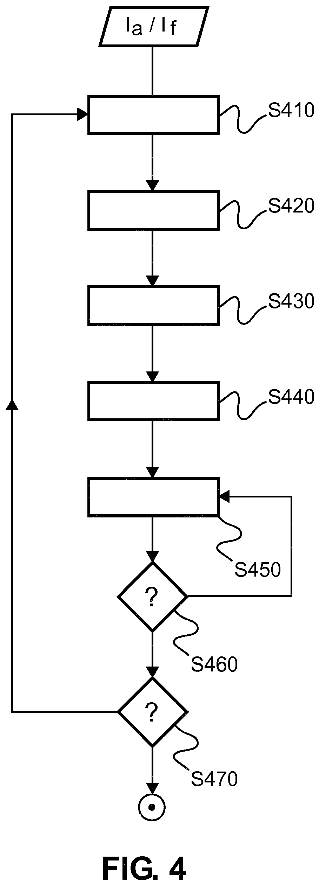

Reference is now made to Figure 4 which shows a flow chart for a method for training a machine learning model. It will be understood herein the above described method may be used to implement the above described system in Figure 1-3 although the method and the steps describes herein below are not necessarily tied to the systems described in Figure 1-3. The method including some or all of the steps described below may hence also be construed as a teaching in their own right.

At step S410 a training input image from a corpus of training images is received and fed into a target machine learning model to be trained.

At step S420 the target training machine learning model having an initial parameterization transforms the received training input image into an intermediate representation or "code" and then produces therefrom a training output image.

The intermediate representation CR has a lower dimensionality than the training input image and the training output image. The dimensionality of the training input image and of the training output image is the same. Forcing the dimensionality down to the code during the processing of the training input image promotes robustness, a better learning and allows combating over-fitting.

In addition to the target machine learning model the proposed method uses two additional auxiliary machine learning models, an image discriminator and a code discriminator, each have an initial parameterization.

The image discriminator and the code discriminator are coupled to the target machine learning model via a parameter adjustment process that adjust in one or more iterations the configuration, that is the parameter, in the three models to improve an objective function *F.* The objectives for the two auxiliary models are adverse and opposed to the objective of the target machine learning model.

More specifically, in step S430 the image discriminator processes the training output image from step S420 to compute estimated probabilities for the training output image to belong to two classes. In other words, the image discriminator classifies the training output image into one of two classes. One class as envisaged herein, corresponds to the corpus images and the other class corresponds to images generatable by the machine learning model. In other words, in step S430 an attempt is made to discriminate images from the training corpus and images from the target machine learning model.

In step S440 the code discriminator processes the intermediate representation, i.e. the code, to computes estimated probabilities that this intermediate representation belongs to two pre-defined representation classes. In other words, in step S440 an attempt is made to classify the code as produced by the target machine learning model when processing the input imagery into one of at least two classes. One class corresponds to intermediate representations generatable by the target model whilst the other class corresponds to sample codes from a corpus of sample codes. In yet other words, in step S440 an attempt is made to discriminate between a certain class of reference code and those codes that are reproducible by the training target model G.

In embodiments the corpus is produced in a separate step by generating in a random procedure, through simulation, a plurality of different such reference codes. A measure to quantify a complexity of representation is used in step S440. In one embodiments, the measure is a sparsity measure, in particular in an over-complete representation system. In NNs or other models, the number of non-zero elements, or elements below a negligibility threshold, should be low.

In step S450, the current configuration i.e. the parameters in one, two or three of the models are adjusted to improve the objective function. The objectives are such that the output image produced by the target model G is so to induce a high error rate in the classification attempts by the two discriminators. Opposed and adverse thereto, the two auxiliary models are configured to produce in steps S430 and S440 classifications with high confidence that is to achieve a low error rate, that is, an attempt to make to avoid wrong classifications.

In step S460 it is checked whether a stopping condition is fulfilled. If not, the adjustment is repeated in one or more iterations.

If the stopping condition is fulfilled process flow continues to step S470 where it is checked whether a new training input image has been received. If no, then the process terminates. If yes, that is, if a new training input image has been received at S410, the method proceeds in a new loop to now process the newly received training input image as described above.

One, or any two, or all three of the described models may be implemented as neural networks but this is not necessarily so in all embodiments. Other machine learning models may also be used instead.

The adjustment step S450 can be implemented by suitable optimization schemes such as gradient descent, stochastic gradient descent, conjugate gradients and other optimization schemes. In particular, in one embodiment backpropagation is used in particular when one, two or all three models are implemented as neural networks in particular convolutional networks. The target model is preferably implemented as an auto-encoder or variational auto-encoder as required.

Although the above have been described as three separate models, these may be combined into one or more super-models.

One or more features disclosed herein may be configured or implemented as/with circuitry encoded within a computer-readable medium, and/or combinations thereof. Circuitry may include discrete and/or integrated circuitry, application specific integrated circuitry (ASIC), a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a model like the World Wide Web and can be downloaded into the working memory of a data processor from such a model. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A system (TS) for training a machine learning model for image processing, comprising:

    an input interface (IN) for receiving at least one training input image (Ia,If) drawn from a set of training images;
    at least three machine learning models (G, DI, DC) having parameters that define a configuration, the at least three machine learning models comprising:

        a target machine learning model (G) to transform the training input image into an intermediate representation (RC) and to produce therefrom a training output image (Io);
        a first auxiliary machine learning model (DI) for image discrimination;
        a second auxiliary machine learning model (DC) to facilitate regularizing of the training of the target machine learning model;
        wherein the first auxiliary machine learning model (DI) selectively processes the training output image or a sample image from the set of training images, to attempt classifying the respective image into one of two image classes, thereby producing a first intermediate result indicative of the image classification; and

wherein the second auxiliary machine learning model (DC) selectively processes the intermediate representation or a sample representation, to attempt classifying the respective representation into one of two representation classes, thereby producing a second intermediate result indicative of the representation classification;

a model parameter adjuster (PA) is configured to adjust the configuration based on the first intermediate result and on the second intermediate result.

2. System of claim 1, comprising a representation sampler (SCS) capable to produce one or more of the sample representations that define a first representation class of the representation classes.

3. System of claims 2, wherein the representation sampler (SCS) is configured to produce the one or more sample representations at a pre-defined level of complexity, such as sparsity.

4. System of any one of the previous claims, wherein the set of training images comprises images of at least a first and second category.

5. System of claim 4, wherein imagery in a first category includes at least one image artifact and wherein imagery in a second category includes no artifact or includes an artifact at a lower severity than in the imagery of the first category.

6. System of any one of the previous claims, wherein the model parameter adjuster (PA) is configured to adjust the configuration so as to improve at least one objective function.

7. System of claim 6, wherein there is a plurality of objective functions each associated with a respective objective and a respective one of the three models, wherein the objective associated with the target model is in an adverse relationship to at least one of the objectives associated with the two auxiliary models.

8. System wherein at least one of the at least three models is a neural network.

9. System of any one of the previous claims, wherein the training output image has the same size or dimensionality as the training input image, and wherein the intermediate representation has a size or dimensionality different from the training input image.

10. System of claim 8 or 9, wherein the first and second auxiliary machine learning model are adversarially coupled to the target machine learning model.

11. A system (SAR) for image artifact reduction, comprising:
an input interface (IN') to receive an input image;
a machine learning component (MLC) including the target model (G) previously trained by a system as per any one of the previous claims 1-10, the machine learning component (MLC) to process the input image to produce an output image with an image artifact reduced.

12. Method of training a machine learning model, comprising the steps of:

receiving (S410) at least one training input image (Ia,If) drawn from a set of training images;
transforming (S420), by a target machine learning model (G), the training input image into an intermediate representation (RC) and to produce therefrom a training output image (Io);
selectively processing (S430), by a first auxiliary machine learning model (DI), the training output image or a sample image from the set of training images, to attempt classifying the respective image into one of two image classes, thereby producing a first intermediate result indicative of the image classification;
selectively processing (S440), by a second auxiliary machine learning model (DC), the intermediate representation or a sample representation, to attempt classifying the respective representation into one of two representation classes, thereby producing a second intermediate result indicative of the representation classification;
adjusting (S450) a configuration based on a first intermediate result and on the second intermediate result, said configuration comprising parameters of the three machine learning models (G, DI, DC).

13. An imaging arrangement (AR) comprising:

a system as per claim 11;
an imaging apparatus (IA) supplying an input image to be processed by the system; and
a display device (DD) for displaying the processed image.

14. A computer program element, which, when being executed by at least one processing unit (PU), is adapted to cause the processing unit (PU) to perform the method as per claim 12.

15. A computer readable medium having stored thereon the program element of claim 14.

**FIG. 1**

**FIG. 2**

FIG. 3

**FIG. 4**

Europäisches
Patentamt

European
Patent Office

Office européen
des brevets

# EUROPEAN SEARCH REPORT

Application Number

EP 19 17 0988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG LONG ET AL: "Local and Global Sparsity for Deep Learning Networks", 29 December 2017 (2017-12-29), INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 74 - 85, XP047459280, ISBN: 978-3-642-17318-9 [retrieved on 2017-12-29] * abstract * * section 4.2 * | 1-15 | INV. G06K9/62 |
| A | SALOME KAZEMINIA ET AL: "GANs for Medical Image Analysis", ARXIV.ORG, CORNELL UNIVERSITY LIBRARY, 201 OLIN LIBRARY CORNELL UNIVERSITY ITHACA, NY 14853, 21 December 2018 (2018-12-21), XP081083902, * abstract * * section 4.5 * | 1-15 | |
| T | IAN J GOODFELLOW ET AL: "Generative Adversarial Nets", NIPS'14 PROCEEDINGS OF THE 27TH INTERNATIONAL CONFERENCE ON NEURAL INFORMATION PROCESSING SYSTEMS, vol. 2, 8 December 2014 (2014-12-08), pages 2672-2680, XP055572979, DOI: https://dl.acm.org/citation.cfm?id=2969125 * the whole document * | 1-15 | |

TECHNICAL FIELDS SEARCHED (IPC)

G06K

The present search report has been drawn up for all claims

| Place of search | Date of completion of the search | Examiner |
|---|---|---|
| The Hague | 7 October 2019 | Philips, Petra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                       
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. M. MITCHELL.** Machine Learning. McGraw-Hill, 1997
- **IAN GOODFELLOW et al.** ''Generative Adversarial Nets '' (''GAN). *arXiv:1406.2661v1/stat.ML,* 10 June 2014
- **M D ZEILER et al.** Adaptive Deconvolutional Networks for Mid and High Level Feature Learning. *International Conference on Computer Vision,* 2011
- **SERGEY IOFFE et al.** Batch Normalization: Accelerating Deep Network Training by Reducing Internal Covariate Shift. *arXiv:1502.03167v3 [cs.LG,* 02 March 2015
- **ANDREW L. MAAS et al.** Rectifier Nonlinearities Improve Neural Network Acoustic Models. *Proc. ICML,* 2013, vol. 30
- **ALEC RADFORD ; LUKE METZ et al.** Unsupervised Representation Learning with Deep Convolutional Generative Adversarial Networks. *arXiv:1511.06434 [cs.LG*
- **DAVID E RUMELHART et al.** Learning representations by back-propagating errors. *Nature,* 1986, vol. 323, 533-536
- **MARTIN ARJOVSKY et al.** Wasserstein gan. *arXiv preprint arXiv:1701.07875,* 2017
- **GUO-JUN QI.** Loss-sensitive generative adversarial networks on Lipschitz densities. *arXiv preprint arXiv:1701.06264,* 2017